# EUROPEAN PATENT APPLICATION

(11) **EP 4 635 816 A1**
(43) Date of publication of application: **22.10.2025**
(21) Application number: 22968250.5
(22) Date of filing: 16.12.2022
(51) Int. Cl.: B60W 40/06, G06V 20/58, G06V 10/80, G06V 20/70, G06V 10/82, G06V 10/143

(54) **AUTO PARKING METHOD AND DEVICE, AND VEHICLE**

(71) Applicant: Shenzhen Yinwang Intelligent Technologies Co., Ltd., Shenzhen, Guangdong 518129 (CN)
(72) Inventor: WANG, Jinnan, Shenzhen, Guangdong 518129 (CN); LIU, Ziluan, Shenzhen, Guangdong 518129 (CN); XUE, Peng, Shenzhen, Guangdong 518129 (CN); LIU, Xing, Shenzhen, Guangdong 518129 (CN)
(74) Representative: Maiwald GmbH
(86) International application number: PCT/CN2022/139658
(87) International publication number: WO 2024/124546

(57) **Abstract**

This application provides an automatic parking method and apparatus, and a vehicle, and relates to the field of intelligent driving. The method includes: obtaining a first image; recognizing the first image, to determine a size of an obstacle and a target category to which the obstacle belongs; and determining a parking solution based on the size of the obstacle and the target category to which the obstacle belongs. **In** technical solutions of this application, the parking solution is determined by comprehensively considering the size of the obstacle and the target category to which the obstacle belongs. This improves accuracy of obstacle recognition in an automatic parking process, and also improves accuracy of automatic parking. In this way, differentiated parking is implemented for different obstacles to further implement intelligent parking.

## Description

### TECHNICAL FIELD

This application relates to the field of intelligent driving, and more specifically, to an automatic parking method and apparatus, and a vehicle.

### BACKGROUND

Automatic parking (auto parking, AP) is automatic parking of vehicles into parking spaces. To be specific, an autonomous driving system can help users park vehicles into parking spaces semi-automatically or fully automatically. The automatic parking may include automatic parking assist (auto parking assist, APA), remote parking assist (remote parking assist, RPA), automated valet parking (auto valet parking, AVP), and the like.

In an automatic parking process, there may be obstacles occupying or intruding in and around the parking space. If these objects cannot be accurately recognized, the parking cannot be accurately performed.

Therefore, how to improve accuracy of obstacle recognition in an automatic parking process to further improve accuracy of automatic parking is an urgent problem to be resolved.

### SUMMARY

Embodiments of this application provide an automatic parking method and apparatus, and a vehicle, so that refined recognition can be performed on an obstacle in a parking space, and a parking solution can be determined based on a size of the obstacle and a target category to which the obstacle belongs. This can improve accuracy of automatic parking.

According to a first aspect, an automatic parking method is provided. The method includes: obtaining a first image; recognizing the first image, to determine a size of an obstacle and a target category to which the obstacle belongs; and determining a parking solution based on the size of the obstacle and the target category to which the obstacle belongs.

For example, the first image may be obtained through a camera, and the camera may be used in a machine vision technology.

For example, the first image is an image for an environment around a parking space, and may include all or some objects in the environment around the parking space.

For example, the obtained first image may be an image directly shot by the camera, or may be an image obtained after image preprocessing is performed on an image shot by the camera. The image preprocessing includes image flipping, image rotation, Gaussian filtering, erosion and dilation, and the like.

For example, the first image may be recognized by using a semantic segmentation method.

For example, the size of the obstacle may include a height of the obstacle.

Based on the foregoing technical solution, the parking solution is determined by comprehensively considering the size of the obstacle and the target category to which the obstacle belongs. This improves accuracy of obstacle recognition in an automatic parking process, and also improves accuracy of automatic parking. In this way, differentiated parking is implemented for different obstacles to further implement intelligent parking.

With reference to the first aspect, in some implementations of the first aspect, when the target category to which the obstacle belongs is a first category, the obstacle is ignored in a parking process.

Based on the foregoing technical solution, the parking solution is determined based on the target category to which the obstacle belongs, and for the obstacle whose target category is the first category, it is directly determined to ignore the obstacle in the parking process, so that computing overheads for determining the parking solution can be effectively reduced.

With reference to the first aspect, in some implementations of the first aspect, the first category includes a grass category or a flower category.

Based on the foregoing technical solution, the soft grass category or flower category is classified as the first category, to ensure that when a vehicle performs automatic parking, the obstacle of this category is ignored, which does not cause a vehicle scratch or the like.

With reference to the first aspect, in some implementations of the first aspect, when the target category to which the obstacle belongs is a second category,
when a height of the obstacle is less than or equal to a first height, the obstacle is ignored in the parking process;
when a type of the obstacle belongs to a first subcategory of the second category, and a height of the obstacle is greater than a first height and is less than or equal to a second height, at least a second distance between a vehicle and the obstacle is maintained in the parking process;
when a type of the obstacle belongs to a second subcategory of the second category, and a height of the obstacle is greater than a first height and is less than or equal to a second height, at least a first distance between a vehicle and the obstacle is maintained in the parking process; or
when a type of the obstacle belongs to a second subcategory of the second category, and a height of the obstacle is greater than a second height, at least a second distance between a vehicle and the obstacle is maintained in the parking process.

Based on the foregoing technical solution, when the target category to which the obstacle belongs is the second category, there are corresponding parking solutions for obstacles of different types and different heights, to improve the accuracy of the automatic parking.

With reference to the first aspect, in some implementations of the first aspect, the first subcategory of the second category includes a branch category, and the second subcategory of the second category includes a leaf category.

Based on the foregoing technical solution, the hard branch category and leaf category are classified as the second category, to ensure that a distance between the vehicle and the obstacle is appropriately mastered when the vehicle performs automatic parking, and avoid a scratch between the obstacle and the vehicle in the parking process or after the parking.

With reference to the first aspect, in some implementations of the first aspect, when the target category to which the obstacle belongs is a third category, at least a third distance between the vehicle and the obstacle is maintained in a parking process.

For example, the third distance may be equal to the second distance, or may be greater than the second distance.

Based on the foregoing technical solution, the parking solution is determined based on the target category to which the obstacle belongs. When the target category to which the obstacle belongs is the third category, it is directly determined that at least the third distance is maintained from the obstacle in the parking process, so that safety of the vehicle in the automatic parking process is ensured, and computing overheads for determining the parking solution can also be effectively reduced.

With reference to the first aspect, in some implementations of the first aspect, the third category includes a shrub category or a tree category.

Based on the foregoing technical solution, the hard shrub category or tree category is classified as the third category, to ensure that a distance between the vehicle and the obstacle is appropriately mastered when the vehicle performs automatic parking, and avoid a scratch between the obstacle and the vehicle in the parking process.

With reference to the first aspect, in some implementations of the first aspect, the first height is determined based on a height of a chassis of the vehicle, the second height is preset, the second height is greater than the first height, the first distance and the second distance are preset, and the first distance is less than the second distance.

For example, the first height and the second height may be dynamically adjusted. For example, if the height of the chassis of the vehicle is 16 cm, the first height may be a height less than 16 cm, for example, 12 cm. The foregoing first height may be a first height determined by an intelligent driving system by default based on a height of a chassis of a vehicle body. In addition, the first height may be further autonomously adjusted according to a requirement of a user. For example, the system determines by default that the first height is 12 cm, and the user may set the first height to 10 cm in consideration of safety.

For example, the first distance and the second distance may be relatively safe distances between the vehicle and the obstacle in the parking process. For example, the first distance is 0.5 m, and the second distance is 1 m. Correspondingly, the third distance may be greater than or equal to 1 m.

For example, the user may be a driver of the vehicle, may be a passenger of the vehicle, or may be further an authorized passenger of the vehicle. The authorized passenger is entitled to control the automatic parking of the vehicle.

Based on the foregoing technical solution, the first height, the second height, the first distance, and the second distance are appropriately set, so that it is ensured that no scratch occurs between the vehicle and the obstacle in the automatic parking process, and the accuracy of the automatic parking is improved.

With reference to the first aspect, in some implementations of the first aspect, feature extraction is performed on the first image, to determine a first feature map; semantic segmentation is performed on the first feature map, to determine semantic information of each pixel in the first feature map, where the semantic information indicates the type of the obstacle; and a first recognition result is determined based on semantic information of pixels that form the obstacle and that are in the first feature map, where the first recognition result includes the target category to which the obstacle belongs.

For example, the size of the obstacle can be determined based on the first feature map.

For example, semantic segmentation may be performed on the first feature map by using a segmentation network.

For example, the segmentation network may alternatively be obtained through training based on a neural network model. In a process of training the segmentation network, a set of initial model parameters may be set for the segmentation network, and then the model parameters of the segmentation network are gradually adjusted based on a difference between a label map and a semantic segmentation result of a training image. Till the difference between the label map and the semantic segmentation result of the training image falls within a specific preset range, or when a quantity of training times reaches a preset quantity of times, model parameters of the segmentation network in this case are determined as final parameters of the segmentation network model, to complete the training of the semantic segmentation network of the image.

Based on the foregoing technical solution, the target category to which the obstacle belongs can be determined. This helps determine a subsequent parking policy, to ensure that the vehicle can accurately and safely park into the parking space.

With reference to the first aspect, in some implementations of the first aspect, the first recognition result further includes a first confidence, and the first confidence indicates accuracy of the first recognition result. When the first confidence is less than a first threshold, a pulse signal is transmitted to the obstacle, and an echo signal reflected from the obstacle is received, where the echo signal includes echo energy information; and a second recognition result is determined based on the echo energy information and the first recognition result, where the second recognition result includes a re-determined target category to which the obstacle belongs.

For example, reflectivity of obstacles of different categories or with different surface materials is different, and the echo energy information can represent the reflectivity of the obstacle. Before reflectivity detection is performed, a series of mapping relationship information between the reflectivity and both the surface material of the object and the category of the object is stored. The mapping relationship information may be determined through a pre-experiment.

For example, a first classification result and a second classification result may be different results, or may be a same result.

Based on the foregoing technical solution, reflectivity information of the obstacle is obtained to assist in determining the category of the obstacle, and the surface material of the obstacle can be determined in more detail based on the reflectivity. Therefore, accuracy of determining the target category of the obstacle can be further improved.

With reference to the first aspect, in some implementations of the first aspect, the second recognition result further includes a second confidence, and the second confidence indicates accuracy of the second recognition result. When the second confidence is less than the first threshold, a user is prompted, through a human-machine interface (human-machine interface, HMI), to determine the target category to which the obstacle belongs.

Based on the foregoing technical solution, a parking failure or a vehicle scratch caused by an inappropriate parking solution due to a low obstacle recognition confidence can be avoided. This further protects personal and property safety of the user.

With reference to the first aspect, in some implementations of the first aspect, the vehicle is controlled, based on one or more of the parking solutions, to perform automatic parking.

Based on the foregoing technical solution, the automatic parking method is applicable to a scenario in which there are a plurality of obstacles in a parking environment. The plurality of parking solutions are determined for the plurality of obstacles, and the vehicle is comprehensively controlled, based on the plurality of parking solutions, to perform automatic parking. This improves applicability of the automatic parking method, and also improves accuracy of the automatic parking method.

With reference to the first aspect, in some implementations of the first aspect, the first image is obtained through a lidar, where the first image is a point cloud image.

Based on the foregoing technical solution, compared with an image directly obtained through a camera, the point cloud image can describe information about a current environment around the parking space in more detail, and is easier to perform feature extraction. In addition, more feature information is obtained to determine the category of the obstacle, and therefore improve the first confidence of the first classification result. The automatic parking solution may be directly determined based on the first classification result, so that computing efficiency of determining the automatic parking solution is improved.

According to a second aspect, an automatic parking apparatus is provided. The apparatus includes: an obtaining unit, configured to obtain a first image; a recognition unit, configured to recognize the first image, to determine a size of an obstacle and a target category to which the obstacle belongs; and a processing unit, configured to determine a parking solution based on the size of the obstacle and the target category to which the obstacle belongs.

Based on the foregoing technical solution, the parking solution is determined by comprehensively considering the size of the obstacle and the target category to which the obstacle belongs. This improves accuracy of obstacle recognition in an automatic parking process, and also improves accuracy of automatic parking. In this way, differentiated parking is implemented for different obstacles to further implement intelligent parking.

With reference to the second aspect, in some implementations of the second aspect, the processing unit is specifically configured to: when the target category to which the obstacle belongs is a first category, ignore the obstacle in a parking process.

Based on the foregoing technical solution, when the target category to which the obstacle belongs is the first category, it is directly determined to ignore the obstacle in the parking process, so that computing overheads for determining the parking solution can be effectively reduced.

With reference to the second aspect, in some implementations of the second aspect, the first category includes a grass category or a flower category.

Based on the foregoing technical solution, the soft grass category or flower category is classified as the first category, to ensure that when a vehicle performs automatic parking, the obstacle of this category is ignored, which does not cause a vehicle scratch or the like.

With reference to the second aspect, in some implementations of the second aspect, the processing unit is specifically configured to: when the target category to which the obstacle belongs is a second category, and when a height of the obstacle is less than or equal to a first height, ignore the obstacle in a parking process; when a type of the obstacle belongs to a first subcategory of the second category, and a height of the obstacle is greater than the first height and is less than or equal to a second height, maintain at least a second distance between the vehicle and the obstacle in a parking process; when a type of the obstacle belongs to a second subcategory of the second category, and a height of the obstacle is greater than the first height and is less than or equal to the second height, maintain at least a first distance between the vehicle and the obstacle in a parking process; or when a type of the obstacle belongs to a second subcategory of the second category, and a height of the obstacle is greater than the second height, maintain at least the second distance between the vehicle and the obstacle in a parking process.

Based on the foregoing technical solution, when the target category to which the obstacle belongs is the second category, there are corresponding parking solutions for obstacles of different types and different heights, to improve the accuracy of the automatic parking.

With reference to the second aspect, in some implementations of the second aspect, the first subcategory of the second category includes a branch category, and the second subcategory of the second category includes a leaf category.

Based on the foregoing technical solution, the hard branch category and leaf category are classified as the second category, to ensure that a distance between the vehicle and the obstacle is appropriately mastered when the vehicle performs automatic parking, and avoid a scratch between the obstacle and the vehicle in the parking process or after the parking.

With reference to the second aspect, in some implementations of the second aspect, the processing unit is specifically configured to: when the target category to which the obstacle belongs is a third category, maintain at least a third distance between the vehicle and the obstacle in a parking process.

Based on the foregoing technical solution, when the target category to which the obstacle belongs is the third category, it is directly determined that at least the third distance is maintained from the obstacle in the parking process, so that safety of the vehicle in the automatic parking process is ensured, and computing overheads for determining the parking solution can also be effectively reduced.

With reference to the second aspect, in some implementations of the second aspect, the third category includes a shrub category or a tree category.

Based on the foregoing technical solution, the hard shrub category or tree category is classified as the third category, to ensure that a distance between the vehicle and the obstacle is appropriately mastered when the vehicle performs automatic parking, and avoid a scratch between the obstacle and the vehicle in the parking process.

With reference to the second aspect, in some implementations of the second aspect, the first height is determined based on a height of a chassis of the vehicle, the second height is preset, the second height is greater than the first height, the first distance and the second distance are preset, and the first distance is less than the second distance.

Based on the foregoing technical solution, the first height, the second height, the first distance, and the second distance are appropriately set, so that it is ensured that no scratch occurs between the vehicle and the obstacle in the automatic parking process, and the accuracy of the automatic parking is improved.

With reference to the second aspect, in some implementations of the second aspect, the recognition unit is specifically configured to: perform feature extraction on the first image, to determine a first feature map; perform semantic segmentation on the first feature map, to determine semantic information of each pixel in the first feature map, where the semantic information indicates the type of the obstacle; and determine a first recognition result based on semantic information of pixels that form the obstacle and that are in the first feature map, where the first recognition result includes the target category to which the obstacle belongs.

Based on the foregoing technical solution, the target category to which the obstacle belongs can be determined. This helps determine a subsequent parking policy, to ensure that the vehicle can accurately and safely park into the parking space.

With reference to the second aspect, in some implementations of the second aspect, the first recognition result further includes a first confidence, the first confidence indicates accuracy of the first recognition result, and the obtaining unit is further configured to: when the first confidence is less than a first threshold, transmit a pulse signal to the obstacle, and receive an echo signal reflected from the obstacle, where the echo signal includes echo energy information; and the processing unit is further configured to determine a second recognition result based on the echo energy information and the first recognition result, where the second recognition result includes a re-determined target category to which the obstacle belongs.

Based on the foregoing technical solution, reflectivity information of the obstacle is obtained to assist in determining the category of the obstacle, and a surface material of the obstacle can be determined in more detail based on reflectivity. Therefore, accuracy of determining the target category of the obstacle can be further improved.

With reference to the second aspect, in some implementations of the second aspect, the second recognition result further includes a second confidence, the second confidence indicates accuracy of the second recognition result, and the apparatus further includes a display unit, configured to: when the second confidence is less than the first threshold, prompt, through a human-machine interface HMI, a user to determine the target category to which the obstacle belongs.

Based on the foregoing technical solution, a parking failure or a vehicle scratch caused by an inappropriate parking solution due to a low obstacle recognition confidence can be avoided. This further protects personal and property safety of the user.

With reference to the second aspect, in some implementations of the second aspect, the apparatus further includes a control unit, configured to control, based on one or more of the parking solutions, the vehicle to perform automatic parking.

Based on the foregoing technical solution, the automatic parking method is applicable to a scenario in which there are a plurality of obstacles in a parking environment. The plurality of parking solutions are determined for the plurality of obstacles, and the vehicle is comprehensively controlled, based on the plurality of parking solutions, to perform automatic parking. This improves applicability of the automatic parking method, and also improves accuracy of the automatic parking method.

With reference to the second aspect, in some implementations of the second aspect, the obtaining unit is specifically configured to obtain the first image through a lidar, where the first image is a point cloud image.

Based on the foregoing technical solution, compared with an image directly obtained through a camera, the point cloud image can describe information about a current environment around the parking space in more detail, and is easier to perform feature extraction. In addition, more feature information is obtained to determine the category of the obstacle, and therefore improve the first confidence of the first classification result. The automatic parking solution may be directly determined based on the first classification result, so that computing efficiency of determining the automatic parking solution is improved.

According to a third aspect, an automatic parking apparatus is provided, including a processor and a memory, where the processor is connected to the memory, the memory is configured to store program code, and the processor is configured to invoke the program code to perform the method according to any one of the possible implementations of the method design of the first aspect.

According to a fourth aspect, a chip system is provided. The chip system is used in an electronic device; the chip system includes one or more interface circuits and one or more processors; the interface circuit and the processor are interconnected through a line; the interface circuit is configured to: receive a signal from a memory of the electronic device, and send the signal to the processor, where the signal includes computer instructions stored in the memory; and when the processor executes the computer instructions, the electronic device performs the method according to any one of the possible implementations of the method design of the first aspect.

According to a fifth aspect, a computer-readable storage medium is provided, and stores a computer program or instructions. The computer program or the instructions are used to implement the method according to any one of the possible implementations of the method design of the first aspect.

According to a sixth aspect, a computer program product is provided. When computer program code or instructions are executed on a computer, the computer is enabled to perform the method according to any one of the possible implementations of the method design of the first aspect.

According to a seventh aspect, an embodiment of this application provides a vehicle. The vehicle includes the apparatus according to any one of the possible implementations of the second aspect.

### BRIEF DESCRIPTION OF DRAWINGS

FIG. 1 is a functional block diagram of a vehicle 100 according to an embodiment of this application;
FIG. 2 is a diagram of a parking space environment according to an embodiment of this application;
FIG. 3 is a diagram of another parking space environment according to an embodiment of this application;
FIG. 4 is a schematic flowchart of an automatic parking method according to an embodiment of this application;
FIG. 5 is a schematic flowchart of a semantic segmentation method according to an embodiment of this application;
FIG. 6 is a schematic flowchart of a reflectivity detection method according to an embodiment of this application;
FIG. 7 is a schematic flowchart of determining a parking solution according to an embodiment of this application;
FIG. 8 is an aerial view of a parking space environment according to an embodiment of this application;
FIG. 9 is an aerial view of a first parking range according to an embodiment of this application;
FIG. 10 is a diagram of an obstacle recognition result according to an embodiment of this application;
FIG. 11 is an aerial view of a third parking range according to an embodiment of this application;
FIG. 12 is a diagram of another automatic parking method according to an embodiment of this application;
FIG. 13 is a block diagram of an automatic parking apparatus 1300 according to an embodiment of this application; and
FIG. 14 is a diagram of a structure of an automatic parking apparatus 1400 according to an embodiment of this application.

### DESCRIPTION OF EMBODIMENTS

The following describes technical solutions of embodiments in this application with reference to accompanying drawings.

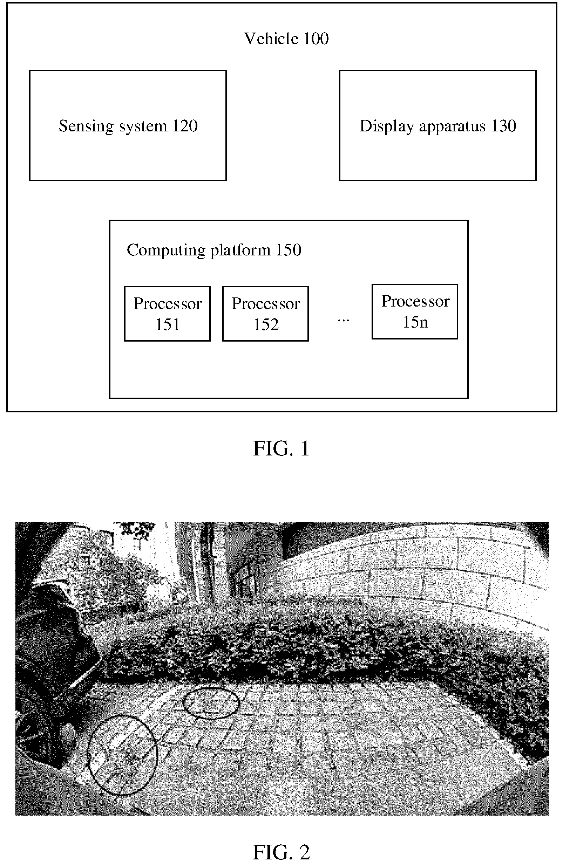

FIG. 1 is a functional block diagram of a vehicle 100 according to an embodiment of this application.

The vehicle 100 may include a sensing system 120, a display apparatus 130, and a computing platform 150. The sensing system 120 may include several types of sensors that sense information about an ambient environment of the vehicle 100. For example, the sensing system 120 may include a positioning system. The positioning system may be a global positioning system (global positioning system, GPS), or may be one or more of a BeiDou system or another positioning system, an inertial measurement unit (inertial measurement unit, IMU), a lidar, a millimeter-wave radar, an ultrasonic radar, or a camera apparatus.

Some or all of functions of the vehicle 100 may be controlled by the computing platform 150. The computing platform 150 may include processors 151 to 15n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (Field Programmable Gate Array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). Besides, the computing platform 150 may further include a memory. The memory is configured to store instructions. Some or all of the processors 151 to 15n may invoke the instructions in the memory, to implement a corresponding function.

Currently, a mainstream automatic parking method is mainly to perform obstacle detection and distance detection based on an ultrasonic wave or a vision technology, to recognize whether there is an obstacle in a parking space in a relatively simple manner. However, the obstacle is not further analyzed. For example, if it is identified, based on the foregoing automatic parking method, that there is an obstacle whose height is 10 cm in the parking space, a vehicle may be directly controlled to avoid the obstacle to park. However, if the obstacle is only a weed whose height is 10 cm, which may be run over in a parking process, and does not need to be deliberately avoided. It can be learned that parking accuracy of the automatic parking method is relatively low.

FIG. 2 is a diagram of a parking space environment according to an embodiment of this application.

There are a plurality of weeds in a parking space. After these weeds are detected, only these weeds are recognized as obstacles based on the mainstream automatic parking method. Therefore, a vehicle may brake and stop before the vehicle approaches the weeds. As a result, the vehicle cannot be completely parked into the parking space, and the front of the vehicle protrudes from the parking space.

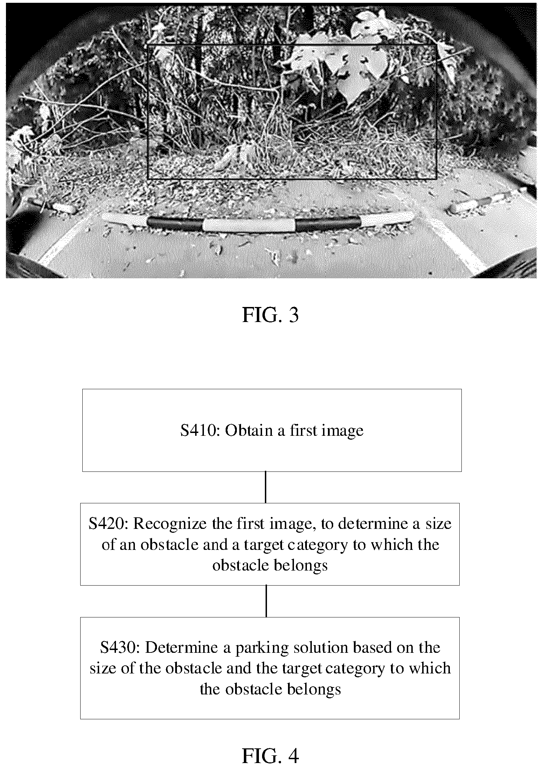

FIG. 3 is a diagram of another parking space environment according to an embodiment of this application.

Some branches behind a parking space intrude into a parking space range. It is difficult to detect these thin branches based on the mainstream automatic parking method. In this case, if a vehicle is directly parked into the parking space, the rear of the vehicle is prone to be scratched by the branch. Even if the branch can be detected, if a specific distance is not reserved between the vehicle and the branch, the branch may swing due to environmental factors such as wind, and the vehicle may be scratched, causing a security risk.

In view of this, embodiments of this application provide an automatic parking method. An automatic parking solution is dynamically adjusted by determining a size of an obstacle and a target category to which the obstacle belongs, to help avoid failure of accurate parking or security risk caused in a parking process due to inaccurate obstacle recognition.

FIG. 4 is a schematic flowchart of an automatic parking method according to an embodiment of this application.

S410: Obtain a first image.

In some possible embodiments, the first image may be obtained through a camera, and the camera may be used in a machine vision technology. In addition, the first image is an image for an environment around a parking space, and may include an object in the entire environment around the parking space.

In some possible embodiments, the parking space is a target parking space into which a vehicle is to be parked. A target object that can affect automatic parking is defined as an obstacle, for example, a plant growing in or around the parking space, a brick placed on the ground, a warning sign or a cone for warning, a pedestrian, or a building.

In some possible embodiments, the obtained first image may be an image directly shot by the camera, or may be an image obtained after image preprocessing is performed on an image shot by the camera. The image preprocessing includes image flipping, image rotation, Gaussian filtering, erosion and dilation, and the like.

S420: Recognize the first image, to determine a size of an obstacle and a target category to which the obstacle belongs.

In some possible embodiments, the first image may be recognized by using a semantic segmentation method. Semantic segmentation is different from a conventional image segmentation manner that is based on features such as a grayscale, a color, a texture, and a shape. The semantic segmentation is usually at a pixel level. To be specific, each pixel in an image is marked with a specific category. Based on this, after objects in the image are obtained through semantic segmentation, the objects can be further classified. The semantic segmentation usually uses the image as an input, and uses a semantic segmentation map as an output. Each pixel in the semantic segmentation map includes a label of a category corresponding to the pixel.

In some possible embodiments, if the first image is directly used as an input of the semantic segmentation, and accuracy of the semantic segmentation needs to be ensured, a requirement on the first image is high. For example, requirements on an image shooting angle, image shooting definition, and an image shooting distance are high. Therefore, to reduce a requirement of the semantic segmentation on shooting of the first image, more spatial details and features that can represent semantic information in the first image may be extracted through feature extraction, to provide stronger feature information for the semantic segmentation. Therefore, accuracy of the semantic segmentation is improved.

In some possible embodiments, feature extraction may be performed on the first image by using a neural network. For example, feature extraction is performed on the first image by using a convolutional neural network (convolutional neural network, CNN). The CNN is a deep neural network with a convolutional structure. The convolutional neural network includes a feature extractor that includes a convolution layer and a subsampling layer, and the feature extractor may be considered as a filter. The convolution layer is a neuron layer that is in the convolutional neural network and at which convolution processing is performed on an input signal. At the convolution layer of the convolutional neural network, one neuron may be connected only to some adjacentlayer neurons. One convolution layer usually includes several feature planes, and each feature plane may include some rectangularly arranged neural units. Neural units in a same feature plane share a weight, and the shared weight herein is a convolution kernel. Weight sharing may be understood as that an image information extraction manner is irrelevant to a location. The convolution kernel may be initialized in a form of random-sized matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

In some possible embodiments, the size of the obstacle may include a height of the obstacle.

S430: Determine a parking solution based on the size of the obstacle and the target category to which the obstacle belongs.

Based on the foregoing technical solution, the parking solution is determined by comprehensively considering the size of the obstacle and the target category to which the obstacle belongs. This improves accuracy of obstacle recognition in an automatic parking process, and further improves accuracy of automatic parking. In this way, differentiated parking is implemented for different obstacles to further implement intelligent parking.

For example, the target category is a first category, a second category, and a third category separately. After the size of the obstacle and the target category to which the obstacle belongs are determined, manners of determining the parking solution may be correspondingly classified into three manners.

### Manner 1:

When the target category to which the obstacle belongs is the first category, ignore the obstacle in the parking process.

The first category may include a grass category or a flower category.

It can be learned that, in Manner 1, the target category to which the obstacle belongs serves as a main basis for determining the parking solution. Because the first category may correspond to a soft and short obstacle, the vehicle is not affected in the automatic parking process of the vehicle. Therefore, when it is determined that the target category to which the obstacle belongs is the first category, it may be determined that these obstacles may be ignored in the parking process.

Based on the foregoing technical solution, when the target category to which the obstacle belongs is the first category, it is directly determined to ignore the obstacle in the parking process, so that computing overheads for determining the parking solution can be effectively reduced.

### Manner 2:

When the target category to which the obstacle belongs is the second category, determining the parking solution by comprehensively considering the size of the obstacle and a type of the obstacle is specifically as follows:
(a) When the height of the obstacle is less than or equal to a first height, ignore the obstacle in the parking process.
(b) When the type of the obstacle belongs to a first subcategory of the second category, and the height of the obstacle is greater than a first height and is less than or equal to a second height, maintain at least a second distance between the vehicle and the obstacle in the parking process.
(c) When the type of the obstacle belongs to a second subcategory of the second category, and the height of the obstacle is greater than a first height and is less than or equal to a second height, maintain at least a first distance between the vehicle and the obstacle in the parking process.
(d) When the type of the obstacle belongs to a second subcategory of the second category, and the height of the obstacle is greater than a second height, maintain at least a second distance between the vehicle and the obstacle in the parking process.

The second category may include a branch category or a leaf category, the first subcategory of the second category may be the branch category, and the second subcategory of the second category may be the leaf category.

It can be learned that, in Manner 2, the height of the obstacle and the target category to which the obstacle belongs are both used as main bases for determining the parking solution. The second category may correspond to a hard obstacle. Therefore, if such obstacle is in contact with the vehicle, a scratch may be caused on a surface of the vehicle. In addition, if a height of such obstacle is high and the vehicle does not maintain a specific distance from the obstacle, the obstacle may also scratch the vehicle in a process of swinging with the wind. Therefore, the type and height of the obstacle need to be comprehensively considered to determine whether to ignore the obstacle or whether to maintain at least the first distance or the second distance from the obstacle.

The first height is determined based on a height of a chassis of the vehicle, the second height may be preset based on the first height, and the second height is greater than the first height. The first distance and the second distance are preset, and the first distance is less than the second distance.

In some possible embodiments, the first height and the second height may be dynamically adjusted. For example, if the height of the chassis of the vehicle is 16 cm, the first height may be a height less than 16 cm, for example, 12 cm. The foregoing first height may be a first height determined by an intelligent driving system by default based on a height of a chassis of a vehicle body. In addition, the first height may be further autonomously adjusted according to a requirement of a user. For example, the system determines by default that the first height is 12 cm, and the user may set the first height to 10 cm in consideration of safety. However, if the user sets the first height to be greater than or equal to a height of the vehicle body, in consideration of safety, when the parking method provided in the foregoing embodiment is used, the user may be reminded, through an HMI interface, that "the height currently set is greater than or equal to the height of the vehicle body, please reset it", and the user is reminded to modify the first height to an appropriate and safe value. Similarly, the second height may also be set or adjusted by the system by default or by setting by the user.

In some possible embodiments, the user may be a driver of the vehicle, may be a passenger of the vehicle, or may be further an authorized passenger of the vehicle. The authorized passenger is entitled to control the automatic parking of the vehicle.

In some possible embodiments, the first distance and the second distance may be relatively safe distances between the vehicle and the obstacle in the parking process. For example, the first distance is 0.5 m, and the second distance is 1 m.

Based on the foregoing technical solution, when the target category to which the obstacle belongs is the second category, there are corresponding parking solutions for obstacles of different types and different heights, to improve the accuracy of the automatic parking.

Manner 3: When the target category to which the obstacle belongs is the third category, maintain at least a third distance between the vehicle and the obstacle in the parking process.

The third category may include a shrub category or a tree category.

In some possible embodiments, the third distance may be equal to the second distance, or may be greater than the second distance.

It can be learned that, in Manner 3, the target category to which the obstacle belongs is also used as a main basis for determining the parking solution. Because the third category corresponds to a very hard and high obstacle, at least the second distance needs to be maintained between the vehicle and such obstacle in the automatic parking process of the vehicle, to avoid a scratch with the obstacle.

Based on the foregoing technical solution, when the target category to which the obstacle belongs is the third category, it is directly determined that at least the third distance is maintained from the obstacle in the parking process, so that safety of the vehicle in the automatic parking process is ensured, and computing overheads for determining the parking solution can also be effectively reduced.

In some possible embodiments, the first category, the second category, and the third category are not limited to the subcategories included in the foregoing, and are not limited to a case in which the obstacle is the plant. Another appropriate obstacle type may be further expanded into various categories. For example, the warning sign, the cone, the pedestrian, and the building mentioned in the foregoing embodiment may be grouped into the third category, the brick mentioned in the foregoing embodiment may be grouped into the second category, and a small soil heap may be grouped into the first category. In addition, the category may be further expanded and refined, for example, a fourth category and a fifth category may be added. This is not limited in embodiments of this application.

In some possible embodiments, in one parking space, there may be only one obstacle, or there may be a plurality of obstacles, and these obstacles may belong to different target categories and have different sizes. Therefore, the vehicle may be controlled to perform automatic parking based on one or more of the parking solutions determined by using the foregoing method.

In some possible embodiments, when the plurality of parking solutions are determined, these parking solutions need to be combined, to jointly indicate the vehicle to perform automatic parking. For example, after the first image is recognized, it is determined that, in a current parking space environment, there is an obstacle 1 that belongs to the first category and that is less than or equal to the first height, and there is also an obstacle 2 that belongs to the second category and whose height is greater than the second height. In this case, in a process of controlling automatic parking, the obstacle 1 is ignored, and at least the second distance needs to be maintained from the obstacle 2 in the parking process, to ensure that the vehicle can accurately and safely park into the parking space.

Based on the foregoing technical solution, the automatic parking method is applicable to a scenario in which there are the plurality of obstacles in a parking environment. The plurality of parking solutions are determined for the plurality of obstacles, and the vehicle is comprehensively controlled, based on the plurality of parking solutions, to perform automatic parking. This improves applicability of the automatic parking method, and also improves accuracy of the automatic parking method.

In some possible embodiments, the foregoing provides the example of determining the parking solution with reference to the height of the obstacle when the obstacle is the first category, the second category, or the third category. However, the category may be further expanded, for example, the fourth category may be added. The category may be the pedestrian grouped into the third category in the foregoing embodiment. Alternatively, size information of the obstacle may be expanded, for example, information such as a width of the obstacle may be added. Based on more information, a parking solution selection basis is further refined. For example, it is recognized that the category of the obstacle is the fourth category, the height of the obstacle is 170 cm, and the width of the obstacle is 65 cm. It is determined that the obstacle is the pedestrian in the fourth category. In this case, a horn is used to signal the pedestrian to leave the parking space. If the pedestrian does not leave the parking space within a first time period, the vehicle maintains at least the second distance from the obstacle in the parking process, or prompts the user to take over a parking right.

Based on the foregoing technical solution, the accuracy of the automatic parking is further improved. In this way, differentiated parking can be implemented for different obstacles to further implement intelligent parking.

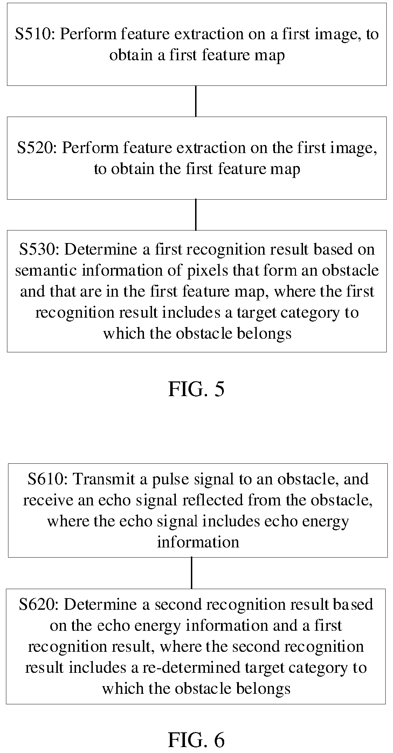

FIG. 5 is a schematic flowchart of a semantic segmentation method according to an embodiment of this application. The method is applied to an automatic parking method provided in embodiments of this application, and is specifically used to perform semantic segmentation on the first image in the foregoing embodiment.

S510: Perform feature extraction on the first image, to obtain a first feature map.

In some possible embodiments, feature extraction may be performed on the first image by using the CNN provided in the foregoing embodiment.

In some possible embodiments, the first feature map includes a size of an obstacle.

S520: Perform semantic segmentation on the first feature map, to determine semantic information of each pixel in the first feature map, where the semantic information indicates a type of the obstacle.

In some possible embodiments, semantic segmentation may be performed on the first feature map by using a segmentation network. The segmentation network may alternatively be obtained through training based on a neural network model. In a process of training the segmentation network, a set of initial model parameters may be set for the segmentation network, and then the model parameters of the segmentation network are gradually adjusted based on a difference between a label map and a semantic segmentation result of a training image. Till the difference between the label map and the semantic segmentation result of the training image falls within a specific preset range, or when a quantity of training times reaches a preset quantity of times, model parameters of the segmentation network in this case are determined as final parameters of the segmentation network model, to complete the training of the semantic segmentation network of the image.

S530: Determine a first recognition result based on semantic information of pixels that form the obstacle and that are in the first feature map, where the first recognition result includes a target category to which the obstacle belongs.

Based on the foregoing technical solution, the target category to which the obstacle belongs can be determined. This helps determine a subsequent parking policy, to ensure that a vehicle can accurately and safely park into a parking space.

In some possible embodiments, the first recognition result further includes a first confidence, and the first confidence indicates accuracy of the first recognition result. When the first confidence is less than a first threshold, it indicates that a first classification result is unreliable. The first threshold is a preset appropriate reference value, for example, 0.8 or 0.85. It can be learned from the foregoing embodiments that, the first classification result may be determined through feature extraction and semantic segmentation of the first image shot by a camera. If there is corresponding noise impact on a current environment, for example, rainwater, smoke, or dust, or each pixel element in the image is unclear due to insufficient illumination, accuracy of the first classification result may be reduced, that is, the first confidence is relatively low. In view of this, that reflectivity detection may be performed on an obstacle in an environment around the parking space through a lidar includes the following steps:
FIG. 6 is a schematic flowchart of a reflectivity detection method according to an embodiment of this application.

S610: Transmit a pulse signal to an obstacle, and receive an echo signal reflected from the obstacle, where the echo signal includes echo energy information.

In some possible embodiments, reflectivity of obstacles of different categories or with different surface materials is different. Before reflectivity detection is performed, a series of mapping relationship information between the reflectivity and both the surface material of the object and the category of the object is stored. The mapping relationship information may be determined through a pre-experiment. During actual reflectivity detection, before the pulse signal is transmitted, energy of the pulse signal may be recorded. After the echo signal is received, energy of the echo signal may also be correspondingly recorded. The echo energy information includes the energy of the echo signal. Because the pulse signal is preset fixed energy, the reflectivity of the obstacle may be determined by using the echo energy information.

S620: Determine a second recognition result based on the echo energy information and a first recognition result, where the second recognition result includes a re-determined target category to which the obstacle belongs.

In some possible embodiments, it is assumed that a first classification result is a second category among the foregoing obstacle categories, for example, a branch. However, a corresponding first confidence is relatively low, and is less than a first threshold. In this case, reflectivity detection may be performed on the obstacle by using steps S610 and S620, and the echo energy information corresponding to the obstacle is determined, to determine a category of the obstacle again with reference to the first classification result. For example, it can be learned, based on the echo energy information, that the obstacle may be a shrub or may be a banana leaf. Then, analysis is performed with reference to the first classification result, and a second classification result of the obstacle is finally determined. It is determined that the obstacle is the shrub and belongs to a third category among the foregoing obstacle categories. Then, a parking solution is determined in a corresponding manner in the foregoing embodiments.

The first classification result and the second classification result may be different results, or may be a same result.

Based on the foregoing technical solution, reflectivity information of an obstacle is obtained to assist in determining the category of the obstacle, and the surface material of the obstacle can be determined in more detail based on the reflectivity. Therefore, accuracy of determining the target category of the obstacle can be further improved.

In some possible embodiments, because the surface material of the object may be identified by detecting the reflectivity of the object, hardness of the surface material of the object may be further analyzed. For example, the obstacle is a plant, and factors that affect reflectivity of the plant include leaf pigment, cell structure, and water content. Therefore, the foregoing features of the plant may be analyzed based on different wavelengths, and a type and surface hardness of the plant may be determined based on the foregoing features. If reflectivity of the plant for wavelengths of 0.4 µm to 0.6 µm is 10% to 20% and reflectivity of the plant for wavelengths of 2.0 µm to 2.2 µm is 10% to 20%, the plant is a green leafy plant, and has a soft material and high water content. Further, with reference to a height of the obstacle which is 10 cm, it may be considered that the obstacle is a weed, and the obstacle is grouped into a first category.

Similarly, if reflectivity of the plant for wavelengths of 0.8 µm to 1.6 µm is stable at about 40%, it indicates that the obstacle is a rock obstacle, and no further analysis is required. It may be determined that the obstacle needs to be parked at a second distance, to ensure vehicle safety.

In some possible embodiments, the second recognition result further includes a second confidence, and the second confidence indicates accuracy of the second recognition result. The second confidence may also be compared with the first threshold. When the second confidence is less than the first threshold, it indicates that the second classification result is unreliable. A user may be prompted, through an HMI, to determine the target category to which the obstacle belongs.

Based on the foregoing technical solution, a parking failure or a vehicle scratch caused by an inappropriate parking solution due to a low obstacle recognition confidence can be avoided. This further protects personal and property safety of the user.

In some possible embodiments, the first image may alternatively be a point cloud image obtained through a lidar. Correspondingly, a process of performing feature extraction and semantic segmentation on the first image may be a process of performing feature extraction and point cloud segmentation based on the point cloud image.

Based on the foregoing technical solution, compared with an image directly obtained through a camera, the point cloud image can describe information about a current environment around a parking space in more detail, and is easier to perform feature extraction. In addition, more feature information is obtained to determine the category of the obstacle, and therefore improve the first confidence of the first classification result. The automatic parking solution may be directly determined based on the first classification result, so that computing efficiency of determining the automatic parking solution is improved.

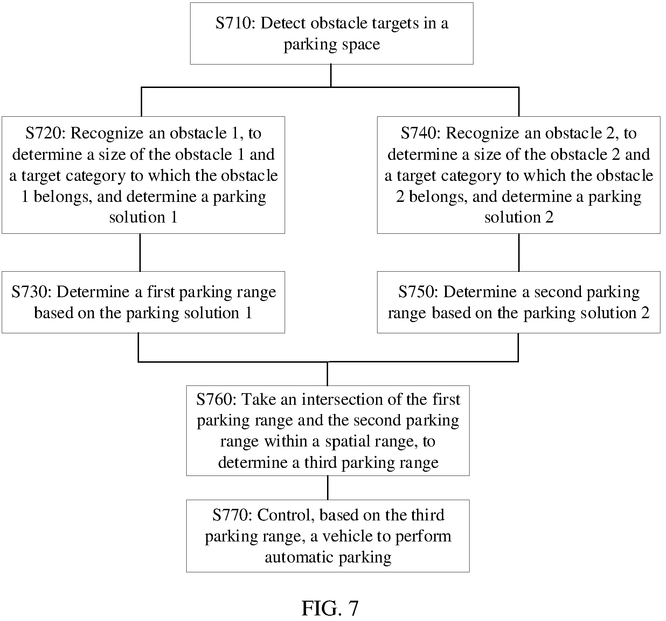

FIG. 7 is a schematic flowchart of determining a parking solution according to an embodiment of this application.

In some possible embodiments, an example in which there are two obstacles in a parking space is used. A process of determining the automatic parking solution may be specifically the following steps:
S710: Detect obstacle targets in the parking space.

It is determined that there are two obstacles in the parking space: an obstacle 1 and an obstacle 2.

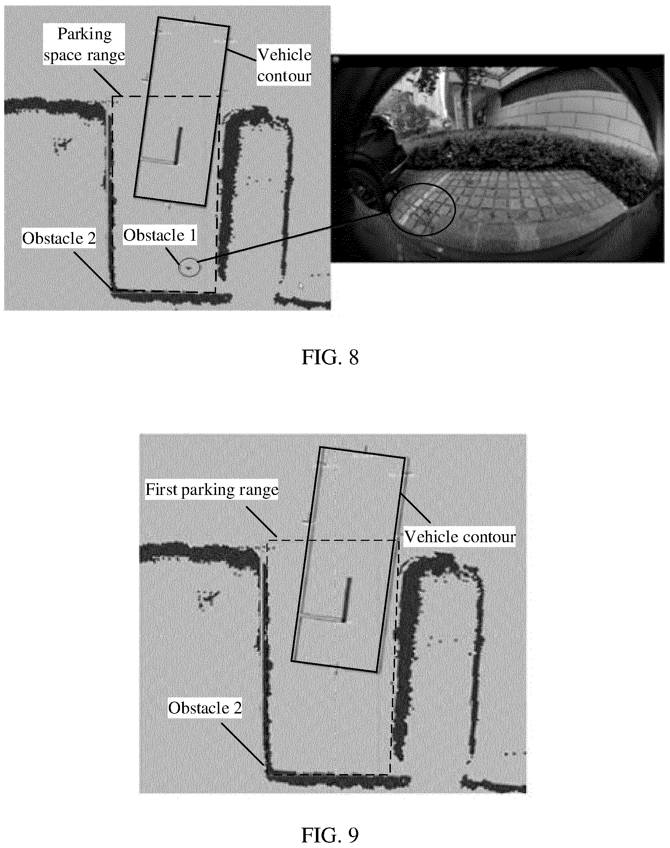

In some possible embodiments, in a process of detecting the obstacle, at least detection of a parking space range is included, an aerial view of a parking space environment is displayed on a display interface of an HMI, to present the aerial view of the parking space environment to a user. An aerial view of a determined parking space environment is shown in FIG. 8. FIG. 8 is an aerial view of a parking space environment according to an embodiment of this application.

S720: Recognize the obstacle 1, to determine a size of the obstacle 1 and a target category to which the obstacle 1 belongs, and determine a parking solution 1.

For example, the obstacle 1 is a weed. It can be determined that the obstacle 1 belongs to a first category, and a height is less than a first height. Therefore, in the parking solution 1, the obstacle is ignored in a parking process.

S730: Determine a first parking range based on the parking solution 1.

In some possible embodiments, the first parking range is less than or equal to the parking space range. For the parking solution 1, the first parking range is equal to the parking space range.

In some possible embodiments, an aerial view of the first parking range may be displayed on the display interface of the HMI, to present the aerial view of the first parking range to the user. The aerial view of the first parking range is shown in FIG. 9. FIG. 9 is an aerial view of a first parking range according to an embodiment of this application.

S740: Recognize the obstacle 2, to determine a size of the obstacle 2 and a target category to which the obstacle 2 belongs, and determine a parking solution 2.

For example, the obstacle 2 is a shrub. It can be determined that the obstacle 2 belongs to a third category. In other words, at least a third distance is maintained between the vehicle and the obstacle 2 in the parking process.

S750: Determine a second parking range based on the parking solution 2.

In some possible embodiments, similar to the first parking range, the second parking range is less than or equal to the parking space range. For the parking solution 2, the second parking range is less than the parking space range and the first parking range.

In some possible embodiments, an aerial view of the second parking range may also be displayed on the display interface of the HMI, to present the aerial view of the second parking range to the user.

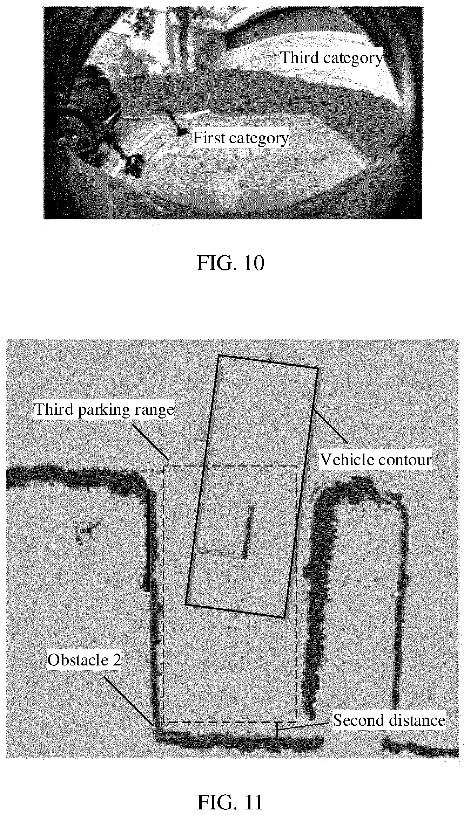

In some possible embodiments, FIG. 10 is a diagram of an obstacle recognition result according to an embodiment of this application. As shown in FIG. 10, recognition results of the obstacle 1 and the obstacle 2 may be directly presented to the user with reference to a real-time image obtained through the camera.

S760: Take an intersection of the first parking range and the second parking range within a spatial range, to determine a third parking range.

In some possible embodiments, an aerial view of the third parking range may also be displayed on the display interface of the HMI and replace the aerial views of the first parking range and the second parking range, to present the aerial view of the third parking range to the user. In this way, the user is notified more clearly of a basis for determining the third parking range. The aerial view of the third parking range is shown in FIG. 11. FIG. 11 is an aerial view of a third parking range according to an embodiment of this application. Because the first parking range is the same as the parking space range, the third parking range is equal to the second parking range.

S770: Control, based on the third parking range, the vehicle to perform automatic parking.

Based on the foregoing technical solution, a safe parking solution can be determined based on the obstacle around the parking space environment, and a parking range can be further determined. Automatic parking is performed based on the parking range, and the parking range is presented to the user through the HMI. Therefore, parking experience of the user is improved, and user safety is ensured.

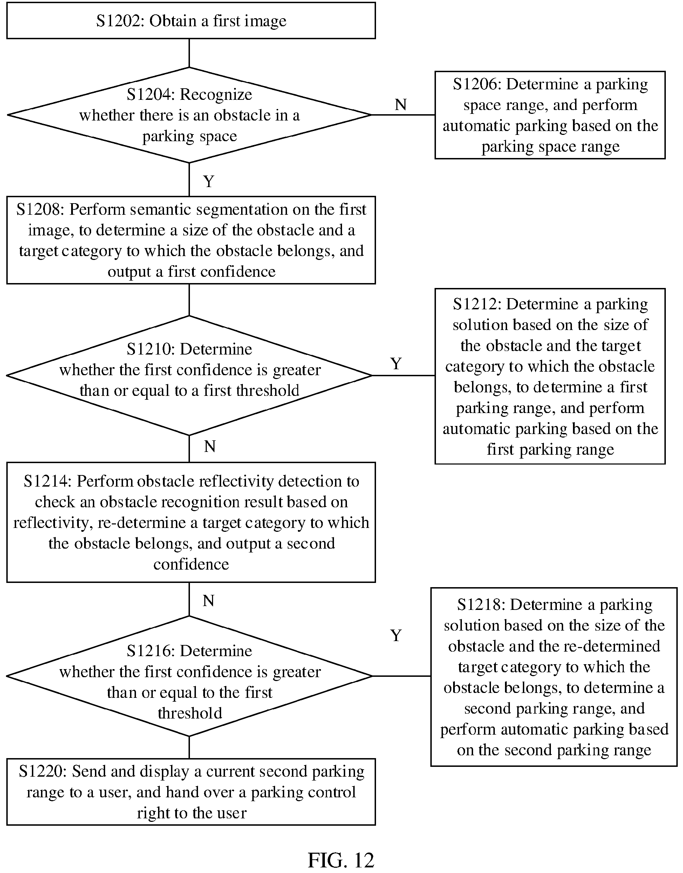

FIG. 12 is a diagram of another automatic parking method according to an embodiment of this application.

After it is determined that a vehicle travels to a target parking space in a parking lot, the following operations may be performed.

S1202: Obtain a first image.

S1204: Recognize, based on the first image, whether there is an obstacle in the parking space.

If there is the obstacle, proceed to S1208. If there is no obstacle, proceed to S1206.

S1206: Determine a parking space range, and perform automatic parking based on the parking space range.

S1208: Perform semantic segmentation on the first image, to determine a size of the obstacle and a target category to which the obstacle belongs, and output a first confidence.

S1210: Determine whether the first confidence is greater than or equal to a first threshold.

If the first confidence is greater than or equal to the first threshold, proceed to S1212. If the first confidence is less than the first threshold, proceed to S1214.

In some possible embodiments, a reason why the first confidence is relatively low may be that illumination brightness of a current parking space environment is relatively low, and consequently, it is difficult to accurately extract a feature in an image feature extraction process. Alternatively, the reason may be that the current parking space environment is in a bad weather environment such as a rainy day or a foggy day, and consequently, there is a large amount of noise in an extracted feature map, and it is difficult to accurately extract the feature.

S1212: Determine a parking solution based on the size of the obstacle and the target category to which the obstacle belongs, to determine a first parking range, and perform automatic parking based on the first parking range.

S1214: Perform obstacle reflectivity detection to check an obstacle recognition result based on reflectivity, re-determine a target category to which the obstacle belongs, and output a second confidence.

S1216: Determine whether the second confidence is greater than or equal to the first threshold.

If the second confidence is greater than or equal to the first threshold, proceed to S1218. If the second confidence is less than the first threshold, proceed to S1220.

S1218: Determine a parking solution based on the size of the obstacle and the re-determined target category to which the obstacle belongs, to determine a second parking range, and perform automatic parking based on the second parking range.

S 1220: Send and display a current second parking range to a user, and hand over a parking control right to the user.

In some possible embodiments, after the parking control right is handed over to the user, the user may approve the currently determined second parking range, or the user may control the vehicle to perform parking.

Based on the foregoing technical solution, a specific form and a classification of the obstacle in the parking space range can be recognized, and the parking solution can be determined based on information in the two aspects. In addition, in a process of determining the obstacle classification, a confidence may be further output to indicate whether the obstacle classification is accurate. If the obstacle classification is inaccurate, an increasing amount of related information of the obstacle is gradually obtained. If the obstacle classification is still inaccurate, the user may be asked to confirm the obstacle classification, or the parking control right may be handed over to the user. This implements intelligent parking and also ensures parking safety.

Besides, an embodiment of this application further provides an apparatus for implementing any one of the foregoing methods. For example, an automatic parking apparatus is provided. The apparatus includes units (or means) configured to implement any one of the foregoing automatic parking methods.

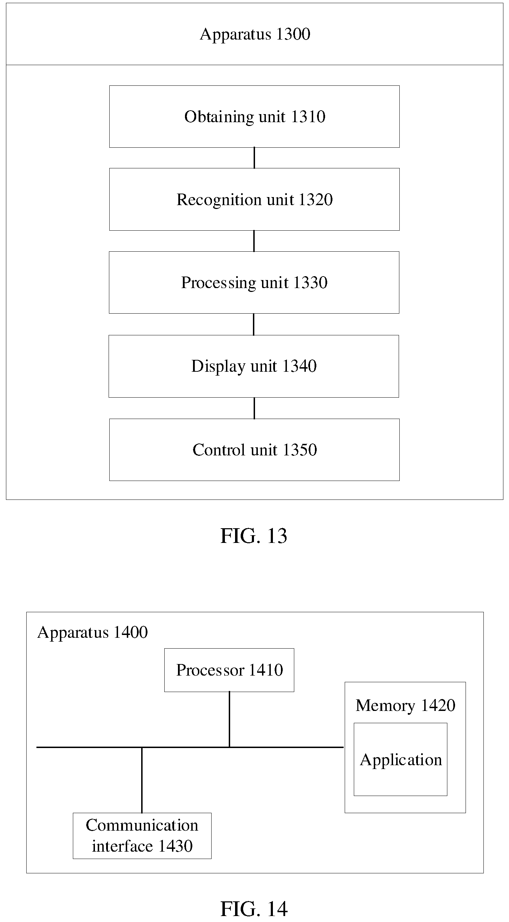

FIG. 13 is a block diagram of an automatic parking apparatus 1300 according to an embodiment of this application. As shown in FIG. 13, the apparatus 1300 includes:
an obtaining unit 1310, configured to obtain a first image, where

In some possible embodiments, the first image shot by a camera may be obtained by using a processor in the obtaining unit 1310;
a recognition unit 1320, configured to recognize the first image, to determine a size of an obstacle and a target category to which the obstacle belongs; and
a processing unit 1330, configured to determine a parking solution based on the size of the obstacle and the target category to which the obstacle belongs.

In some possible embodiments, the processing unit 1330 is specifically configured to: when the target category to which the obstacle belongs is a first category, ignore the obstacle in a parking process.

In some possible embodiments, the first category includes a grass category or a flower category.

In some possible embodiments, when the recognition unit 1320 determines that the target category of the obstacle is a second category, the processing unit 1330 is specifically configured to:
when a height of the obstacle is less than or equal to a first height, ignore the obstacle in the parking process;
when a type of the obstacle belongs to a first subcategory of the second category, and a height of the obstacle is greater than a first height and is less than or equal to a second height, maintain at least a second distance between a vehicle and the obstacle in the parking process;
when a type of the obstacle belongs to a second subcategory of the second category, and a height of the obstacle is greater than a first height and is less than or equal to a second height, maintain at least a first distance between a vehicle and the obstacle in the parking process; or
when a type of the obstacle belongs to a second subcategory of the second category, and a height of the obstacle is greater than a second height, maintain at least a second distance between a vehicle and the obstacle in the parking process.

In some possible embodiments, the first subcategory of the second category includes a branch category, and the second subcategory of the second category includes a leaf category.

In some possible embodiments, the processing unit 1330 is specifically configured to: when the target category to which the obstacle belongs is a third category, maintain at least a third distance between the vehicle and the obstacle in the parking process.

In some possible embodiments, the third category includes a shrub category or a tree category.

In some possible embodiments, the first height is determined based on a height of a chassis of the vehicle, the second height is preset, and the second height is greater than the first height. The first distance and the second distance are preset, the first distance is less than the second distance, and the third distance is greater than or equal to the second distance.

In some possible embodiments, the recognition unit 1320 is specifically configured to: perform feature extraction on the first image, to determine a first feature map; perform semantic segmentation on the first feature map, to determine semantic information of each pixel in the first feature map, where the semantic information indicates a type of the obstacle; and determine a first recognition result based on semantic information of pixels that form the obstacle and that are in the first feature map, where the first recognition result includes the target category to which the obstacle belongs.

In some possible embodiments, the first recognition result further includes a first confidence, and the first confidence indicates accuracy of the first recognition result. The obtaining unit 1310 is further configured to: when the first confidence is less than a first threshold, transmit a pulse signal to the obstacle, and receive an echo signal reflected from the obstacle. The echo signal includes echo energy information.

The processing unit 1330 is further configured to determine a second recognition result based on the echo energy information and the first recognition result. The second recognition result includes a re-determined target category to which the obstacle belongs.

In some possible embodiments, the second recognition result further includes a second confidence, the second confidence indicates accuracy of the second recognition result, and the apparatus 1300 further includes:
a display unit 1340, configured to: when the second confidence is less than the first threshold, prompt, through a human-machine interface HMI, a user to determine the target category to which the obstacle belongs.

In some possible embodiments, the apparatus 1300 further includes:
a control unit 1350, configured to control, based on one or more of the parking solutions, the vehicle to perform automatic parking.

In some possible embodiments, the obtaining unit 1310 is specifically configured to obtain the first image through a lidar. The first image is a point cloud image.

FIG. 14 is a diagram of a structure of an automatic parking apparatus 1400 according to an embodiment of this application. The automatic parking apparatus 1400 (the apparatus 1400 may be specifically a computer device) shown in FIG. 14 includes a processor 1410, a memory 1420, and a communication interface 1430. The processor 1410, the memory 1420, and the communication interface 1430 implement communication connection with each other through a bus.

The processor 1410 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to execute a related program, to implement a function that needs to be performed by a unit in the automatic parking apparatus 1300 in embodiments of this application, or perform the automatic parking method in the method embodiments of this application, or implement a function that needs to be performed by a module in the automatic parking apparatus 1300 in embodiments of this application.

Alternatively, the processor 1410 may be an integrated circuit chip, and has a signal processing capability. In an implementation process, steps of the automatic parking method in this application may be completed by using a hardware integrated logic circuit in the processor 1410 or instructions in a form of software. Alternatively, the processor 1410 may be a general-purpose processor, a digital signal processor (Digital Signal Processor, DSP), an application-specific integrated circuit (ASIC), a field programmable gate array (Field Programmable Gate Array, FPGA) or another programmable logical device, a discrete gate or transistor logic device, or a discrete hardware component, and may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory 1420. The processor 1410 reads information in the memory 1420, and implements, in combination with hardware of the processor, functions that need to be performed by the units included in the vehicle-mounted apparatus in embodiments of this application, or performs the automatic parking method in the method embodiments of this application.

The memory 1420 may be a read-only memory (Read-Only Memory, ROM), a static storage device, a dynamic storage device, or a random access memory (Random Access Memory, RAM). The memory 1420 may store a program. When the program stored in the memory 1420 is executed by the processor 1410, the processor 1410 and the communication interface 1430 are configured to perform steps of the automatic parking method in embodiments of this application.

The communication interface 1430 uses a transceiver apparatus, for example, but is not limited to, a transceiver, to implement communication between the automatic parking apparatus 1400 and another device or a communication network.

The bus may include a path for transmitting information between components (for example, the processor 1410, the memory 1420, and the communication interface 1430) of the automatic parking apparatus 1400.

It should be understood that the determining unit 1320 and the processing unit 1330 in the automatic parking apparatus 1300 may be equivalent to the processor 1410.

In some possible embodiments, although only the memory, the processor, and the communication interface are shown in the automatic parking apparatus 1400 in FIG. 14, in a specific implementation process, a person skilled in the art should understand that the apparatus 1400 further includes another component required for implementing normal running. In addition, according to a specific requirement, a person skilled in the art should understand that the apparatus 1400 may further include a hardware component for implementing another additional function. Besides, a person skilled in the art should understand that the apparatus 1400 may alternatively include only components required for implementing embodiments of this application, but does not necessarily include all the components shown in FIG. 10.

An embodiment of this application further provides a computer storage medium. The computer storage medium may store a program. When the program is executed, some or all of the steps of any automatic parking method described in the foregoing method embodiments may be implemented. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of software functional unit and sold or used as an independent product, the functions may be stored in a computer-readable storage medium. Based on such an understanding, the technical solutions of this application essentially or parts contributing to the conventional technology or some of the technical solutions may be embodied in a form of software product. The computer software product is stored in a storage medium, and includes several instructions for instructing a computer device (which may be a personal computer, a server, a network device, or the like) to perform all or some of the steps of the methods described in embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An automatic parking method, wherein the method comprises:
obtaining a first image;
recognizing the first image, to determine a size of an obstacle and a target category to which the obstacle belongs; and
determining a parking solution based on the size of the obstacle and the target category to which the obstacle belongs.

2. The method according to claim 1, wherein the determining a parking solution based on the size of the obstacle and the target category to which the obstacle belongs comprises:
when the target category to which the obstacle belongs is a first category, ignoring the obstacle in a parking process.

3. The method according to claim 2, wherein the first category comprises a grass category or a flower category.

4. The method according to claim 1, wherein when the target category to which the obstacle belongs is a second category, the determining a parking solution based on the size of the obstacle and the target category to which the obstacle belongs further comprises:
when a height of the obstacle is less than or equal to a first height, ignoring the obstacle in a parking process;
when a type of the obstacle belongs to a first subcategory of the second category, and a height of the obstacle is greater than the first height and is less than or equal to a second height, maintaining at least a second distance between the vehicle and the obstacle in a parking process;
when a type of the obstacle belongs to a second subcategory of the second category, and a height of the obstacle is greater than the first height and is less than or equal to the second height, maintaining at least a first distance between the vehicle and the obstacle in a parking process; or
when a type of the obstacle belongs to a second subcategory of the second category, and a height of the obstacle is greater than the second height, maintaining at least the second distance between the vehicle and the obstacle in a parking process.

5. The method according to claim 4, wherein the first subcategory of the second category comprises a branch category, and the second subcategory of the second category comprises a leaf category.

6. The method according to claim 1, wherein the determining a parking solution based on the size of the obstacle and the target category to which the obstacle belongs further comprises:
when the target category to which the obstacle belongs is a third category, maintaining at least a third distance between the vehicle and the obstacle in a parking process.

7. The method according to claim 6, wherein the third category comprises a shrub category or a tree category.

8. The method according to claim 4, wherein the first height is determined based on a height of a chassis of the vehicle, the second height is preset, the second height is greater than the first height, the first distance and the second distance are preset, and the first distance is less than the second distance.

9. The method according to any one of claims 1 to 8, wherein the recognizing the first image comprises:
performing feature extraction on the first image, to determine a first feature map;
performing semantic segmentation on the first feature map, to determine semantic information of each pixel in the first feature map, wherein the semantic information indicates the type of the obstacle; and
determining a first recognition result based on semantic information of pixels that form the obstacle and that are in the first feature map, wherein the first recognition result comprises the target category to which the obstacle belongs.

10. The method according to claim 9, wherein the first recognition result further comprises a first confidence, the first confidence indicates accuracy of the first recognition result, and the method further comprises:
when the first confidence is less than a first threshold, transmitting a pulse signal to the obstacle, and receiving an echo signal reflected from the obstacle, wherein the echo signal comprises echo energy information; and
determining a second recognition result based on the echo energy information and the first recognition result, wherein the second recognition result comprises a re-determined target category to which the obstacle belongs.

11. The method according to claim 10, wherein the second recognition result further comprises a second confidence, the second confidence indicates accuracy of the second recognition result, and the method further comprises:
when the second confidence is less than the first threshold, prompting, through a human-machine interface HMI, a user to determine the target category to which the obstacle belongs.

12. The method according to any one of claims 1 to 11, wherein the method further comprises:
controlling, based on one or more of the parking solutions, the vehicle to perform automatic parking.

13. The method according to any one of claims 1 to 12, wherein the obtaining a first image comprises:
obtaining the first image through a lidar, wherein the first image is a point cloud image.

14. An automatic parking apparatus, wherein the apparatus comprises:
an obtaining unit, configured to obtain a first image;
a recognition unit, configured to recognize the first image, to determine a size of an obstacle and a target category to which the obstacle belongs; and
a processing unit, configured to determine a parking solution based on the size of the obstacle and the target category to which the obstacle belongs.

15. The apparatus according to claim 14, wherein the processing unit is specifically configured to:
when the target category to which the obstacle belongs is a first category, ignore the obstacle in a parking process.

16. The apparatus according to claim 15, wherein the first category comprises a grass category or a flower category.

17. The apparatus according to claim 14, wherein when the recognition unit determines that the target category to which the obstacle belongs is a second category, the processing unit is specifically configured to:
when a height of the obstacle is less than or equal to a first height, ignore the obstacle in a parking process;
when a type of the obstacle belongs to a first subcategory of the second category, and a height of the obstacle is greater than the first height and is less than or equal to a second height, maintain at least a second distance between the vehicle and the obstacle in a parking process;
when a type of the obstacle belongs to a second subcategory of the second category, and a height of the obstacle is greater than the first height and is less than or equal to the second height, maintain at least a first distance between the vehicle and the obstacle in a parking process; or
when a type of the obstacle belongs to a second subcategory of the second category, and a height of the obstacle is greater than the second height, maintain at least the second distance between the vehicle and the obstacle in a parking process.

18. The apparatus according to claim 17, wherein the first subcategory of the second category comprises a branch category, and the second subcategory of the second category comprises a leaf category.

19. The apparatus according to claim 14, wherein the processing unit is specifically configured to:
when the target category to which the obstacle belongs is a third category, maintain at least a third distance between the vehicle and the obstacle in a parking process.

20. The apparatus according to claim 19, wherein the third category comprises a shrub category or a tree category.

21. The apparatus according to claim 17, wherein the first height is determined based on a height of a chassis of the vehicle, the second height is preset, the second height is greater than the first height, the first distance and the second distance are preset, and the first distance is less than the second distance.

22. The apparatus according to any one of claims 14 to 21, wherein the recognition unit is specifically configured to:
perform feature extraction on the first image, to determine a first feature map;
perform semantic segmentation on the first feature map, to determine semantic information of each pixel in the first feature map, wherein the semantic information indicates the type of the obstacle; and
determine a first recognition result based on semantic information of pixels that form the obstacle and that are in the first feature map, wherein the first recognition result comprises the target category to which the obstacle belongs.

23. The apparatus according to claim 22, wherein the first recognition result further comprises a first confidence, the first confidence indicates accuracy of the first recognition result, and the obtaining unit is further configured to: when the first confidence is less than a first threshold, transmit a pulse signal to the obstacle, and receive an echo signal reflected from the obstacle, wherein the echo signal comprises echo energy information; and
the processing unit is further configured to determine a second recognition result based on the echo energy information and the first recognition result, wherein the second recognition result comprises a re-determined target category to which the obstacle belongs.

24. The apparatus according to claim 23, wherein the second recognition result further comprises a second confidence, the second confidence indicates accuracy of the second recognition result, and the apparatus further comprises:
a display unit, configured to: when the second confidence is less than the first threshold, prompt, through a human-machine interface HMI, a user to determine the target category to which the obstacle belongs.

25. The apparatus according to any one of claims 14 to 24, wherein the apparatus further comprises:
a control unit, configured to control, based on one or more of the parking solutions, the vehicle to perform automatic parking.

26. The apparatus according to any one of claims 14 to 25, wherein the obtaining unit is specifically configured to:
obtain the first image through a lidar, wherein the first image is a point cloud image.

27. An automatic parking apparatus, comprising a processor and a memory, wherein the processor is connected to the memory, the memory is configured to store program code, and the processor is configured to invoke the program code to perform the method according to any one of claims 1 to 13.

28. A chip system, wherein the chip system is used in an electronic device; the chip system comprises one or more interface circuits and one or more processors; the interface circuit and the processor are interconnected through a line; the interface circuit is configured to: receive a signal from a memory of the electronic device, and send the signal to the processor, wherein the signal comprises computer instructions stored in the memory; and when the processor executes the computer instructions, the electronic device performs the method according to any one of claims 1 to 13.

29. A computer-readable storage medium, wherein the computer-readable storage medium stores a computer program, and the computer program is executed by a processor to perform the method according to any one of claims 1 to 13.

30. A computer program product, wherein when the computer program code or instructions are executed on a computer, the computer is enabled to perform the method according to any one of claims 1 to 13.

31. A vehicle, comprising the apparatus according to any one of claims 14 to 26.
